# EUROPEAN PATENT SPECIFICATION

(11) **EP 1 693 946 B1**
(45) Date of publication and mention of the grant of the patent: **21.10.2009**
(21) Application number: 06002576.4
(22) Date of filing: 08.02.2006
(51) Int. Cl.: H02K 33/02, H02K 16/02, H02K 9/04

(54) **Rotary resonance type motor**
Rotierender Resonanzmotor
Moteur rotatif résonant

(30) Priority: 21.02.2005 KR 2005014015
(43) Date of publication of application: 23.08.2006
(73) Proprietor: LG Electronics, Inc., Seoul 150-010 (KR)
(72) Inventor: Nam, Young Sok, Songpa-ku Seoul 138-240 (KR); Yoo, Myung Keun, Seoul 158-055 (KR); Cho, Seong Ho, Seoul 158-050 (KR)
(74) Representative: Urner, Peter

(56) References cited:
- GB-A- 803 935
- GB-A- 2 317 997
- US-B1- 6 232 690
- PATENT ABSTRACTS OF JAPAN vol. 010, no. 359 (E-460), 3 December 1986 (1986-12-03) -& JP 61 157251 A (SECOH GIKEN INC), 16 July 1986 (1986-07-16)

## Description

### BACKGROUND OF THE INVENTION

### Field of the Invention

The present invention relates to a rotary resonance type motor, and more particularly to a rotary resonance type motor, which is equipped with a swing rotor capable of generating swing force, and with a circulation rotor capable of generating unidirectional rotational force.

### Description of the Related Art

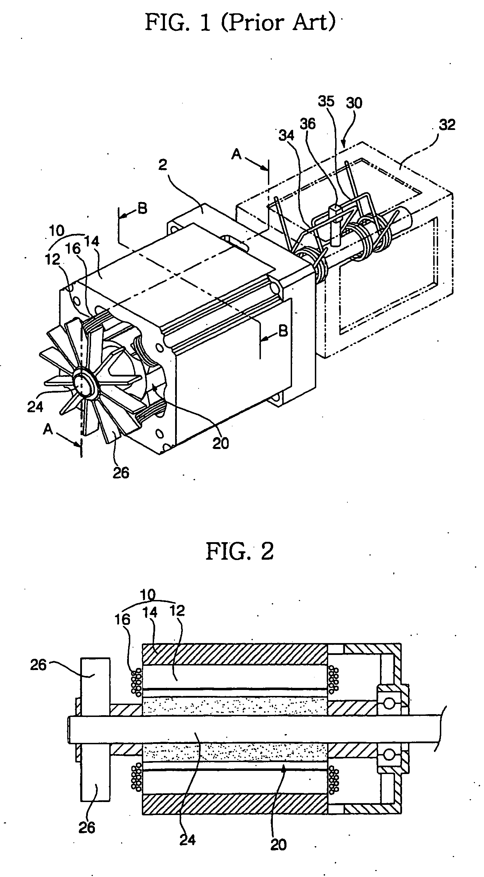

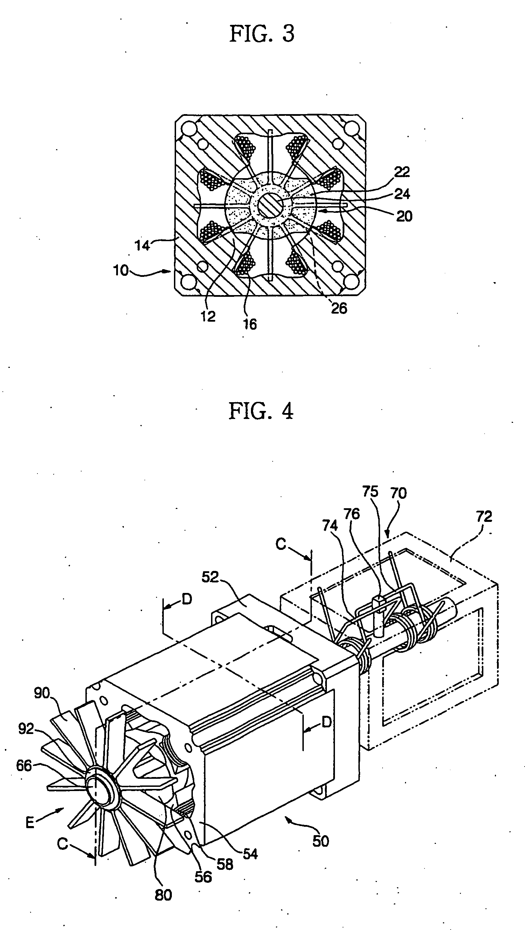

Fig. 1 is a perspective view of a conventional rotary resonance type motor, Fig. 2 is a cross-sectional view taken along line A-A of Fig. 1, and Fig. 3 is a cross-sectional view taken along line B-B of Fig. 1.

As shown in Figs. 1 to 3, the conventional rotary resonance type motor comprises a stator 10, a swing rotor 20 swingably located within the stator 10 so as to be swung by virtue of electromagnetic force caused by interaction with the stator 10, and a resonance means 30 resonating with the swing rotor 20 so as to generate restoring force in the opposite direction to a rotational direction of the swing rotor 20.

The stator 10 comprises a ring-shaped yoke 14 having a plurality of stator teeth 12 formed on an inner wall of the yoke 14, and coils 16 wound around the respective stator teeth 12 while being connected to a power source. Power source is supplied to the coils 16 through a switching device such that the stator teeth 12 adjacent to one another in a circumferential direction can be alternately magnetized.

The stator 10 can be affixed to the stator frame 2.

The swing rotor 20 is provided with two or more swing rotor teeth 22 radially disposed on an outer wall of the swing rotor 20. The swing rotor 20 having the swing rotor teeth 22 as described above is referred to as a claw type swing rotor.

A swing rotor shaft 24 is integrally inserted into a central axis of the swing rotor 20 so as to swing synchronously with the swing rotor 20.

The swing rotor shaft 24 may be integrally equipped with a cooling fan 26 so as to swing therewith, which can forcibly blow air into the rotary resonance type motor shown in Figs. 1 to 3.

The resonance means 30 comprises a casing 32, and a pair of tortion springs 34 and 35 coupled to the casing 32 while being wound around the swing rotor shaft 24 such that they can be alternately twisted by a resonant rod 36 provided to the swing rotor shaft 24 when the swing rotor 20 swings.

Operation of the conventional rotary resonance type motor constructed as described above will be described as follows.

When power source is applied to the coils 16 of the stator 10, a swing rotor 20 is swung in a direction of diminishing magnetic resistance by electromagnetic force caused by interaction with the stator 10.

When the swing rotor 20 is swung, one of the tortion springs 34 and 35 in the resonance means 30 is twisted, so that the resonance means 30 has the restoring force in the opposite direction to the rotational direction of the swing rotor 20. As a result, whenever the stator teeth 12 adjacent to one another in the circumferential direction are alternately magnetized by switching behavior of the switching device, the rotational direction of the swing rotor 20 is changed by the restoring force of the resonance means 30.

Thus, the swing rotor 20 is reciprocally swung within a predetermined angular range by the electromagnetic force caused by the interaction with the stator 10 and the restoring force of the resonance means 30, thereby generating swing force.

Meanwhile, when the swing rotor 20 is swung, the cooling fan 26 forcibly blows air into the rotary resonance type motor as shown in Figs. 1 to 3 while being also swung on the basis of an operating principle of a fan, so that heat is dissipated from the rotary resonance type motor by the cooling fan 26, as shown in Figs. 1 to 3.

However, since the cooling fan 26 is swung along with the swing motor 20 in the conventional rotary resonance type motor as described above, it cannot generate sufficient blowing force. Thus, although the conventional rotary resonance type motor is provided with the cooling fan 26, it can be easily overheated, and thus has a drawback in view of durability and stability.

Meanwhile, one might suggest provision of an additional fan motor for rotating the cooling fan 26 so as to allow the cooling fan 26 to be continuously rotated in one direction, but, in this case, there arise problems of increase in manufacturing costs and volume of the motor due to addition of the fan motor.

JP-A61157251 describes a device for vibrating load by reciprocating including a spiral spring, which is secured to a rotational shaft of the rotor and a body. By energizing an armature coil to alternately excite two salient poles synchronously with the free vibration of the rotor a small size and light weight motor is provided.

### SUMMARY OF THE INVENTION

The present invention has been made to solve the above problems, and it is an object of the present invention to provide a rotary resonance type motor, designed to concurrently generate swing force and unidirectional rotating force.

It is another object of the present invention to provide a rotary resonance type motor, which is provided with a cooling fan for heat dissipation such that it can be rotated by the unidirectional rotating force generated together with the swing force.

In accordance with an aspect of the present invention, the above and other objects can be accomplished by the provision of a rotary resonance type motor, comprising: a stator; a swing rotor swung by electromagnetic force caused by interaction with the stator; a resonant mechanism resonating with the swing rotor so as to generate restoring force in the opposite direction to a rotational direction of the swing rotor and to change the rotational direction of the swing rotor by the restoring force; and a circulation rotor rotating in one direction by electromagnetic force caused by interaction with the stator, a cooling fan integrally coupled to the circulation rotor, so as to allow the cooling fan to rotate synchronously therewith.

The stator may include four stator teeth radially disposed thereon so as to protrude toward the swing rotor, in which the stator teeth adjacent to one another in a circumferential direction are alternately magnetized, and the swing rotor may include two swing rotor teeth radially disposed thereon so as to protrude toward the stator teeth.

The stator may include four stator teeth radially disposed thereon so as to protrude toward the circulation rotor, in which the stator teeth adjacent to one another in a circumferential direction are alternately magnetized, and the circulation rotor may include two circulation rotor teeth radially disposed thereon so as to protrude toward the stator teeth.

The circulation rotor may be inserted into a swing rotor shaft fixed in the swing rotor so as to independently rotate.

The circulation rotor may be integrally coupled to a cooling fan so as to allow the cooling fan to rotate synchronously therewith.

The cooling fan may be bonded to one surface of the circulation rotor.

The cooling fan may be located outside the stator in an axial direction.

The circulation rotor and the cooling fan may be inserted into the swing rotor shaft fixed in the swing rotor so as to independently rotate, and bearings may be located between the cooling fan and the swing rotor shaft.

The swing rotor and the circulation rotor may be linearly arranged in the axial direction.

The swing rotor and the circulation rotor may be located within the stator.

The swing rotor and the circulation rotor may have the same horizontal cross-section.

The stator may include four stator teeth radially disposed thereon so as to protrude toward the swing rotor, in which the stator teeth adjacent to one another in a circumferential direction are alternately magnetized, and the swing rotor may include two swing rotor teeth radially disposed thereon so as to protrude toward the stator teeth.

The stator may include four stator teeth radially disposed thereon so as to protrude toward the circulation rotor, in which the stator teeth adjacent to one another in a circumferential direction are alternately magnetized, and the circulation rotor may include two circulation rotor teeth radially disposed thereon so as to protrude toward the stator teeth.

The circulation rotor and the cooling fan may be inserted into the swing rotor shaft fixed in the swing rotor so as to independently rotate, and bearings may be located between the cooling fan and the swing rotor shaft.

The cooling fan may be bonded to one surface of the circulation rotor.

The cooling fan may be located outside the stator in an axial direction.

The swing rotor and the circulation rotor may be linearly arranged in the axial direction.

The swing rotor and the circulation rotor may have the same horizontal cross-section.

In accordance with yet another aspect of the present invention, a rotary resonance type motor comprises: a stator including a plurality of teeth radially disposed thereon, the teeth adjacent to one another in a circumferential direction being alternately magnetized; a swing rotor swingably located within the stator and swung by electromagnetic force caused by interaction with the stator; a resonant mechanism resonating with the swing rotor so as to generate restoring force in the opposite direction to a rotational direction of the swing rotor and to change the rotational direction of the swing rotor whenever the teeth of the stator are alternately magnetized; a circulation rotor rotatably located within the stator, coupled to a swing rotor shaft of the swing rotor so as to independently rotate, and continuously rotated in one direction by electromagnetic force caused by the interaction with the stator; and a cooling fan integrally coupled to the swing rotor shaft protruded from the stator so as to independently rotate via bearings and bonded to the circulation rotor so as to rotate synchronously with the circulation rotor.

The rotary resonance type motor of the invention constructed as described above allows the circulation rotor to be rotated concurrently with the swing rotor by the single stator, and has the cooling fan coupled to the circulation rotor, thereby allowing sufficient heat dissipation by blowing force generated by the cooling fan.

### BRIEF DESCRIPTION OF THE DRAWINGS

The foregoing and other objects and features of the present invention will be more clearly understood from the following detailed description taken in conjunction with the accompanying drawings, in which:
Fig. 1 is a perspective view of a conventional rotary resonance type motor;
Fig. 2 is a cross-sectional view taken along line A-A of Fig. 1;
Fig. 3 is a cross-sectional view taken along line B-B of Fig. 1;
Fig. 4 is a perspective view of a rotary resonance type motor in accordance with the present invention;
Fig. 5 is an exploded perspective view of a component of the rotary resonance type motor in accordance with the present invention;
Fig. 6 is a cross-sectional view taken along line C-C of Fig. 4;
Fig. 7 is a cross-sectional view taken along line D-D of Fig. 4; and
Fig. 8 is a plan view viewed in a direction of arrow E of Fig. 4.

### DESCRIPTION OF THE PREFERRED EMBODIMENTS

A preferred embodiment will now be described in detail with reference to the accompanying drawings.

Although a rotary resonance type motor in accordance with the invention may be embodied in a variety of forms, a most preferred embodiment of the rotary resonance type motor will be described hereinafter. Meanwhile, since the rotary resonance type motor according the embodiment has the same basic construction as that of the conventional rotary resonance type motor, a detailed description thereof will be omitted.

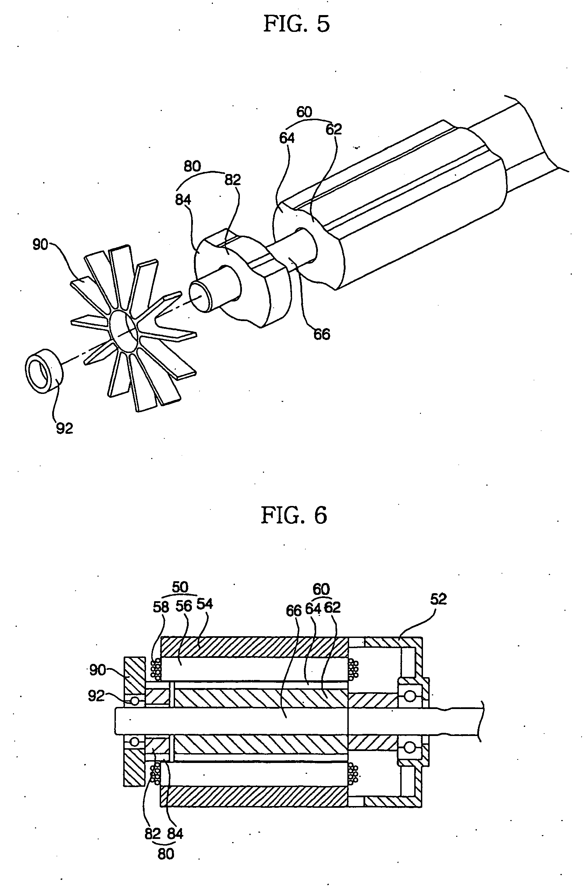

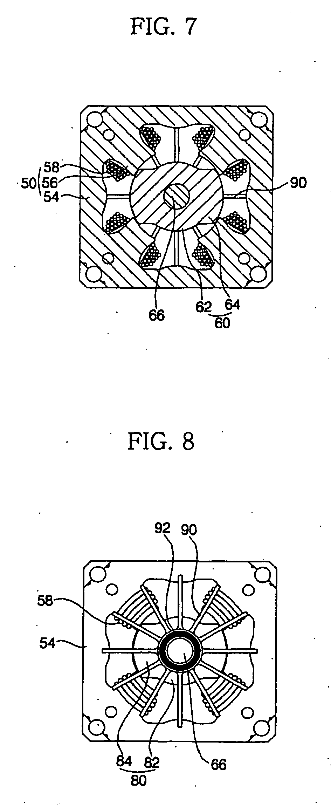

Fig. 4 is a perspective view of a rotary resonance type motor in accordance with the invention, Fig. 5 is an exploded perspective view of a component of the rotary resonance type motor in accordance with the invention, Fig. 6 is a cross-sectional view taken along line C-C of Fig. 4, Fig. 7 is a cross-sectional view taken along line D-D of Fig. 4, and Fig. 8 is a plan view viewed in arrow E of Fig. 4.

The rotary resonance type motor of the invention comprises a stator 50, a swing rotor 60 swingably located within the stator 60, a resonant mechanism 70 resonating with the swing rotor 60 so as to allow the swing rotor 60 to be swung, and a circulation rotor 80 located within the stator 50 so as to rotate in one direction.

The stator 50 comprises a ring-shaped yoke 54 fixed to a stator frame 52, a plurality of stator teeth 56 radially disposed on the ring-shaped yoke 54, and coils 58 wound around the respective stator teeth 56 while being connected to a power source via a switching device.

The stator teeth 56 are provided on an inner wall of the yoke 54 so as to protrude from the yoke 54 to the swing rotor 60 or to the circulation rotor 80.

In this embodiment, the stator teeth 56 may be constituted by four stator teeth circumferentially spaced 90° from each other.

The switching device controls the power source applied to the coils 58 such that stator teeth 56 adjacent to one another in the circumferential direction are alternately magnetized.

The swing rotor 60 is a claw type swing rotor, and comprises a cylindrical swing rotor core 62, and a plurality of swing rotor teeth 64 radially disposed on an outer wall of the swing rotor core 62 so as to protrude towards the stator 50.

The swing rotor core 62 has a swing rotor shaft 66 integrally installed in a central axis of the swing rotor core 62 such that the swing rotor shaft 66 can swing synchronously with the swing rotor 60. The swing rotor shaft 66 has an axial length longer than that of the stator 50 so as to allow the stator 60 to be protruded to the outside of the stator 50.

The swing rotor teeth 64 may be constituted by two swing rotor teeth circumferentially spaced 180° from each other.

The swing rotor 60 has an axial length shorter than that of the stator 50 so as to allow the swing rotor 60 to be installed together with the circulation rotor 80 within the stator 50.

The resonant mechanism 70 comprises a casing 72 having a portion of the swing rotor shaft 66 inserted thereto, a pair of tortion springs 74 and 75 coupled to the casing 72 while being wound around the swing rotor shaft 66 within the casing 72, and a resonant rod 76 protruded from the swing rotor shaft 66 within the casing 72 and hung on the pair of tortion springs 74 and 75.

The casing 72 is located outside the stator 50, and is preferably linearly arranged with the stator 50 in an axial direction so as to allow the portion of the swing rotor shaft 66 to be inserted thereto.

The circulation rotor 80 is a claw type swing rotor, and comprises a circulation rotor yoke 82, and a plurality of circulation rotor teeth 84 radially disposed on an outer wall of the circulation rotor yoke 82 so as to allow the circulation rotor teeth 84 to be protruded towards the stator 50.

The circulation rotor yoke 82 has a ring shape, and can be inserted into the swing rotor shaft 66 so as to independently rotate.

The circulation rotor teeth 84 may be constituted by two circulation rotor teeth circumferentially spaced 180° from each other.

The circulation rotor 80 may have the same horizontal cross-section as that of the swing rotor 60, and is linearly arranged with the swing rotor 60 in the axial direction with the circulation rotor yoke 82 inserted into the swing rotor shaft 66.

The circulation rotor 80 may have an axial length not only shorter than that of the stator 50, but also much shorter than that of the swing rotor 60. Here, the circulation rotor 80 may be partially protruded from the stator 50 in the axial direction such that a cooling fan described below does not interfere with the yoke 54 and the coils 58 of the stator 50.

Meanwhile, the circulation rotor 80 is integrally coupled to the cooling fan 90 for forcibly blowing air into the rotary resonant motor of the invention so as to rotate synchronously therewith.

The cooling fan 90 is constituted by a plurality of wings having a predetermined shape so as to blow air into the rotary resonant motor of the invention while rotating together with the circulation rotor 80.

It is desirable that the cooling fan 90 is located outside the stator 50 and linearly arranged with the stator 50 in the axial direction.

As with the circulation rotor 80, the cooling fan 90 is also inserted into the swing rotor shaft 66 so as to independently rotate. At this time, the cooling fan 90 is bonded to one surface of the circulation rotor 80 while being engaged with the swing rotor shaft 66 via bearings 92 so as to be supported together with the swing rotor shaft 66 by the circulation rotor 80.

Operation of the rotary resonance type motor of the invention constructed as described above will now be described.

When power is applied to the coils 58 of the stator 50, the stator teeth 56 adjacent to one another in the circumferential direction are alternately magnetized, and the swing rotor 60 and the circulation rotor 80 are rotated in a direction of diminishing magnetic resistance by electromagnetic force caused by interaction with the stator 56.

When the swing rotor 60 is swung, one of the tortion springs 74 and 75 in the resonant mechanism 70 is twisted by the resonant rod 76, so that the resonant mechanism 70 has restoring force in the opposite direction to a rotational direction of the swing rotor 60. For reference, only one of the tortion springs 74 and 75 is selectively twisted according to the rotational direction of the swing rotor 60.

As a result, whenever the stator teeth 56 adjacent to one another in the circumferential direction are alternately magnetized, the rotational direction of the swing rotor 60 is changed by the restoring force of the resonant mechanism 70, and is then reciprocally swung within a predetermined angular range. In other words, the swing rotor generates swing force.

On the other hand, since the circulation rotor 80 is not affected by the resonant mechanism 70, the.rotational direction of the circulation rotor 80 is not changed, and generates unidirectional rotational force while continuously rotating in one direction when the stator teeth 56 adjacent to one another in the circumferential direction are alternately magnetized.

Meanwhile, the cooling fan 90 blows air into the rotary resonance type motor of the invention while continuously rotating synchronously with the circulation rotor 80 in one direction. Then, heat of the rotary resonance type motor of the invention is dissipated by blowing force of the cooling fan.

As apparent from the above description, the rotary resonance type motor of the invention comprises a swing rotor swung by electromagnetic force caused by interaction with a stator, and a resonant mechanism resonating with the swing rotor so as to allow the swing rotor to be swung, and a circulation rotor rotating in one direction by electromagnetic force caused by interaction with the stator, thereby generating unidirectional rotational force and swing force at the same time.

Moreover, the rotary resonance type motor of the invention has a cooling fan coupled to the circulation rotor, so that heat of the rotary resonance type motor can be sufficiently dissipated by blowing force of the cooling fan, thereby enhancing durability and stability.

It should be understood that the embodiments and the accompanying drawings have been described for illustrative purposes and the present invention is limited only by the following claims. Further, those skilled in the art will appreciate that various modifications, additions and substitutions are allowed without departing from the scope of the invention as set forth in the accompanying claims.

## Claims

1. A rotary resonance type motor, comprising:
a stator (50);
a swing rotor (60) swung by electromagnetic force caused by interaction with the stator (50);
a resonant mechanism (70) resonating with the swing rotor (60) so as to generate restoring force in an opposite direction to a rotational direction of the swing rotor (60) and to change the rotational direction of the swing rotor (60) by the restoring force; **characterized by**
a circulation rotor (80) rotating in one direction by electromagnetic force caused by interaction with the stator (50), and
a cooling fan (90) integrally coupled to the circulation rotor (80), so as to allow the cooling fan to rotate therewith.

2. The motor as set forth in claim 1, wherein the stator (50) includes four stator teeth (56) radially disposed thereon so as to protrude toward the swing rotor (60), the stator teeth (56) adjacent to one another in a circumferential direction being alternately magnetized, and wherein the swing rotor (60) includes two swing rotor teeth (64) radially disposed thereon so as to protrude toward the stator teeth (56).

3. The motor as set forth in claim 1, wherein the stator (50) includes four stator teeth (56) radially disposed thereon so as to protrude toward the circulation rotor 80, the stator teeth (56) adjacent to one another in a circumferential direction being alternately magnetized, and wherein the circulation rotor (80) includes two circulation rotor teeth (84) radially disposed thereon so as to protrude toward the stator teeth (56).

4. The motor as set forth in claim 1, wherein the circulation rotor (80) is inserted into a swing rotor shaft 66 fixed in the swing rotor (60) so as to independently rotate.

5. The motor as set forth in claim 1, wherein the circulation rotor (80) and the cooling fan (90) are inserted into the swing rotor shaft (66) fixed in the swing rotor (60) so as to independently rotate, and wherein bearings (92) are located between the cooling fan (90) and the swing rotor shaft (60).

6. The motor as set forth in claim 1, wherein the swing rotor (60) and the circulation rotor (80) are linearly arranged in an axial direction.

7. The motor as set forth in claim 1, wherein the swing rotor (60) and the circulation rotor (80) are located within the stator (50).

8. The motor as set forth in claim 1, wherein the circulation rotor (80) and the cooling fan (90) are inserted into the swing rotor shaft (66) fixed in the swing rotor (60) so as to independently rotate, and wherein bearings (92) are located between the cooling fan (90) and the swing rotor shaft (66).

## Patentansprüche

1. Resonanz-Elektromotor, umfassend:
einen Stator (50);
einen Schwenkrotor (60), der durch die durch Wechselwirkung mit dem Stator (50) hervorgerufene elektromagnetische Kraft geschwenkt wird;
einen Resonanzmechanismus (70), der mit dem Schwenkrotor (60) in Resonanz tritt, um eine Rückstellkraft in einer zu einer Drehrichtung des Schwenkrotors (60) entgegengesetzten Richtung zu erzeugen und um die Drehrichtung des Schwenkrotors (60) durch die Rückstellkraft zu ändern;
**gekennzeichnet durch**
einen Umlaufrotor (80), der sich **durch** die **durch** Wechselwirkung mit dem Stator (50) hervorgerufene elektromagnetische Kraft in einer Richtung dreht, und
ein Kühlgebläse (90), das mit dem Umlaufrotor (80) einteilig gekoppelt ist, um dem Kühlgebläse zu ermöglichen, sich mit ihm zu drehen.

2. Elektromotor nach Anspruch 1, wobei der Stator (50) vier Statorzähne (56) enthält, die daran radial angeordnet sind, um zu dem Schwenkrotor (60) vorzustehen, wobei die in einer Umfangsrichtung zueinander benachbarten Statorzähne (56) abwechselnd magnetisiert sind, und wobei der Schwenkrotor (60) zwei Schwenkrotorzähne (64) enthält, die daran radial angeordnet sind, um zu den Statorzähnen (56) vorzustehen.

3. Elektromotor nach Anspruch 1, wobei der Stator (50) vier Statorzähne (56) enthält, die daran radial angeordnet sind, um zu dem Umlaufrotor (80) vorzustehen, wobei die in einer Umfangsrichtung zueinander benachbarten Statorzähne (56) abwechselnd magnetisiert sind, und wobei der Umlaufrotor (80) zwei Umlaufrotorzähne (84) enthält, die daran radial angeordnet sind, um zu den Statorzähnen (56) vorzustehen.

4. Motor nach Anspruch 1, wobei der Umlaufrotor (80) in eine im Schwenkrotor (60) befestigte Schwenkrotorwelle (66) eingesetzt ist, um sich unabhängig zu drehen.

5. Elektromotor nach Anspruch 1, wobei der Umlaufrotor (80) und das Kühlgebläse (90) in die im Schwenkrotor (60) befestigte Schwenkrotorwelle (66) eingesetzt sind, um sich unabhängig zu drehen, und wobei zwischen dem Kühlgebläse (90) und der Schwenkrotorwelle (60) Lager (92) vorhanden sind.

6. Elektromotor nach Anspruch 1, wobei der Schwenkrotor (60) und der Umlaufrotor (80) in einer axialen Richtung geradlinig angeordnet sind.

7. Elektromotor nach Anspruch 1, wobei sich der Schwenkrotor (60) und der Umlaufrotor (80) innerhalb des Stators (50) befinden.

8. Elektromotor nach Anspruch 1, wobei der Umlaufrotor (80) und das Kühlgebläse (90) in die im Schwenkrotor (60) befestigte Schwenkrotorwelle (66) eingesetzt sind, um sich unabhängig zu drehen, und wobei zwischen dem Kühlgebläse (90) und der Schwenkrotorwelle (66) Lager (92) vorhanden sind.

## Revendications

1. Moteur rotatif résonant, comprenant :
un stator (50) ;
un rotor basculant (60) basculé par une force électromagnétique causée par l'interaction avec le stator (50) ;
un mécanisme résonant (70) résonant avec le rotor basculant (60) de façon à générer une force de rappel dans une direction opposée à une direction de rotation du rotor basculant (60) et à changer la direction de rotation du rotor basculant (60) par la force de rappel ; **caractérisé par**
un rotor de circulation (80) tournant dans une direction par la force électromagnétique causée par l'interaction avec le stator (50), et
un ventilateur de refroidissement (90) couplé d'un seul bloc au rotor de circulation (80), de façon à permettre au ventilateur de refroidissement de tourner avec.

2. Moteur selon la revendication 1, dans lequel le stator (50) inclut quatre dents de stator (56) disposées radialement dessus de façon à faire saillie vers le rotor basculant (60), les dents de stator (56) adjacentes les unes aux autres dans une direction circonférentielle étant magnétisées alternativement, et dans lequel le rotor basculant (60) inclut deux dents de rotor basculant (64) disposées radialement dessus de façon à faite saillie vers les dents de stator (56).

3. Moteur selon la revendication 1, dans lequel le stator (50) inclut quatre dents de stator (56) disposées radialement dessus de façon à faire saillie vers le rotor basculant (60), les dents de stator (56) adjacentes les unes aux autres dans une direction circonférentielle étant magnétisées alternativement, et dans lequel le rotor de circulation (80) inclut deux dents de rotor de circulation (84) disposées radialement dessus de façon à faite saillie vers les dents de stator (56).

4. Moteur selon la revendication 1, dans lequel le rotor de circulation (80) est inséré dans un arbre de rotor basculant (66) fixé dans le rotor basculant (60) de façon à tourner indépendamment.

5. Moteur selon la revendication 1, dans lequel le rotor de circulation (80) et le ventilateur de refroidissement (90) sont insérés dans l'arbre de rotor basculant (66) fixé dans le rotor basculant (60) de façon à tourner indépendamment, et dans lequel des paliers (92) sont situés entre le ventilateur de refroidissement (90) et l'arbre de rotor basculant (66).

6. Moteur selon la revendication 1, dans lequel le rotor basculant (60) et le rotor de circulation (80) sont agencés linéairement dans une direction axiale.

7. Moteur selon la revendication 1, dans lequel le rotor basculant (60) et le rotor de circulation (80) sont situés dans le stator (50).

8. Moteur selon la revendication 1, dans lequel le rotor de circulation (80) et le ventilateur de refroidissement (90) sont insérés dans l'arbre de rotor basculant (66) fixé dans le rotor basculant (60) de façon à tourner indépendamment, et dans lequel des paliers (92) sont situés entre le ventilateur de refroidissement (90) et l'arbre de rotor basculant (66).
